# EUROPÄISCHE PATENTANMELDUNG

(11) **EP 4 614 265 A1**
(43) Veröffentlichungstag der Anmeldung: **10.09.2025**
(21) Anmeldenummer: 24161772.9
(22) Anmeldetag: 06.03.2024
(51) Int. Cl.: G05B 23/02

(54) **VORRICHTUNG UND VERFAHREN ZUR STÖRUNGSBESEITIGUNG IN WARENTRANSPORTANLAGEN**

(71) Anmelder: TGW Logistics GmbH, 4614 Marchtrenk (AT)
(72) Erfinder: SADLAUER, Alfred, 4060 Leonding (AT); BALASCH, Alexander, 4600 Wels (AT); WALTENBERGER, Johannes, 4702 Wallern an der Trattnach (AT)
(74) Vertreter: Burger, Hannes

(57) **Zusammenfassung**

Die Erfindung betrifft eine Vorrichtung (1) zur Störungsbeseitigung in Warentransportanlagen. Die Vorrichtung umfasst eine Recheneinrichtung (3) mit einem Maschinen-Lern-Modell (4), Betriebsdaten über mindestens eine Warentransportanlage (2) und eine Vielzahl von Störungsbehebungsmaßnahmen (6) für mindestens eine Warentransportanlage. Die Störungsbehebungsmaßnahmen sind jeweils einer Ursache (7) einer Störung zugeordnet. Die Recheneinrichtung empfängt eine Meldung (9) über eine Störung (8) in mindestens einer Warentransportanlage und ermittelt mit dem Maschinen-Lern-Modell aus der Meldung und den Betriebsdaten die wahrscheinlichste Ursache für die Störung. Dann wird mindestens eine Störungsbehebungsmaßnahme ausgewählt und ausgegeben. Es wird weiterhin ein Verfahren und ein Computerprogrammprodukt bereitgestellt.

## Beschreibung

Die Erfindung betrifft eine Vorrichtung und ein Verfahren zur Störungsbeseitigung in Warentransportanlagen.

In Warentransportanlagen, die beispielsweise Transportbänder, Transportrollen, Hebeeinrichtungen, Transportfahrzeuge und weitere Transporteinrichtungen für Waren in verschiedenen Verpackungen oder auch ohne Verpackung umfassen können, können wie in den meisten Einrichtungen mit mechanischen Anteilen, Störungen auftreten. Solche Störungen können unterschiedliche Ursachen haben. Tritt eine Störung auf, muss durch Bedienpersonal oder technisches Personal, die Ursache gefunden und beseitigt werden, wodurch normalerweise die Anlage mindestens teilweise stillgelegt werden muss. Ein Stillstand wirkt sich negativ auf Verfügbarkeit und Durchsatz aus.

Bei komplexeren Anlagen ist der Zusammenhang zwischen Ursache der Störung und der Störung selbst jedoch nicht immer offensichtlich, wodurch Personal für die jeweilige Anlage geschult und bei Modifikationen auch nachgeschult werden muss. Eine Störung kann auch als Fehler bezeichnet werden. Eine Meldung über eine Störung könnte dann als Fehlermeldung bezeichnet werden.

Darüber hinaus ist der Wissensstand des Personals gegebenenfalls unterschiedlich, was sich in Fehlern bei der Störungsbehebung und damit in schlechterer Anlagenverfügbarkeit bemerkbar macht. Da für das Personal üblicherweise gedruckte Anleitungen oder elektronische Anleitungen auf einem tragbaren Gerät bereitstehen, muss während der Suche nach der Störungsursache auf zwei Geräten, der Anleitung und der Anlage, gearbeitet werden, was zusätzlich zeitlich aufwändig ist.

Der vorliegenden Erfindung liegt daher die Aufgabenstellung zugrunde, die Nachteile der bekannten Lösungen des Standes der Technik zu überwinden und die Beseitigung von Störungen in Warentransportanlagen zu verbessern.

Es wird eine Vorrichtung und ein Verfahren zur Störungsbeseitigung in Warentransportanlagen bereitgestellt.

Die Aufgabe der Erfindung wird durch den Gegenstand der unabhängigen Ansprüche gelöst. In den abhängigen Ansprüchen finden sich vorteilhafte Weiterbildungen.

Gelöst wird diese Aufgabe insbesondere durch ein Maschinen-Lern-Modell, das aus einer Meldung über eine Störung in einer Warentransportanlage und Betriebsdaten der Warentransportanlage die wahrscheinlichste Ursache für die Störung ermittelt und aus bereitgestellten Störungsbehebungsmaßnahmen, denen jeweils Störungsursachen zugeordnet sind, mindestens eine zur Störungsbeseitigung geeignete Störungsbehebungsmaßnahme auswählt. Die ausgewählte Maßnahme wird angezeigt, und über Rückflussinformationen wird die Beseitigung der Störung erfasst bzw. dass die Störung nicht beseitigt wurde.

Eine Warentransportanlage kann zumindest ein(e)
- stationäre Fördertechnik, beispielsweise Rollenförderer, Gurtförderer, Vertikalförderer, Hebeeinrichtung, Hängefördervorrichtung, und/oder
- mobile Fördertechnik, beispielsweise fahrerloses Transportfahrzeuge, insbesondere Einebenenregalbediengerät (Shuttle), Mehrebenenregalbediengerät (stacker crane), Automated Guided Vehicle (AGV), und/oder Autonomous Mobile Robot (AMR), und/oder
- Sortiervorrichtung zum Sortieren der Waren in eine Reihenfolge, und/oder
- Handhabungsvorrichtung, beispielsweise Roboter zum Umladen von Waren, insbesondere Kommissionierroboter (Palettierer) oder Roboter zur Vereinzelung von Waren aus einem Warenstapel (Depalettierer), und/oder
- Lagerregal, beispielsweise stationäres Lagerregal, mobiles Lagerregal, und/oder
- Ladehilfsmittel zum Transport von Ware(n), beispielsweise Tablar, Behälter, Karton, Hängetasche zum hängenden Transport von Ware(n) an einer Hängefördervorrichtung, und/oder
- Arbeitsstation zum Bearbeiten von Aufträgen, insbesondere automatische und/oder manuelle Arbeitsstation, beispielsweise Kommissionierstation, Packstation, und/oder
- Auftragsverwaltungssystem zum elektronischen Erfassen von Aufträgen, und/oder
- Datenverarbeitungsvorrichtung und/oder Datenspeichervorrichtung, beispielsweise Warehouse Management System (WMS), Warehouse Control System (WCS), umfassen.

Insbesondere kann ein Kommissioniersystem zum Lagern von Waren und Kommissionieren von Waren zu Aufträgen eine solche Warentransportanlage umfassen.

Eine stationäre Fördertechnik der Warentransportanlage kann nach einer in der WO 2015/051390 A1 offenbarten Ausführung ausgestaltet sein, die insbesondere einen Rollenförderer offenbart.

Eine stationäre Fördertechnik der Warentransportanlage kann nach einer in der WO 2012/106745 A1 offenbarten Ausführung ausgestaltet sein, die insbesondere eine Hebeeinrichtung für ein Transportfahrzeug (Einebenenregalbediengerät) offenbart.

Eine mobile Fördertechnik der Warentransportanlage kann nach einer in der WO 2016/168878 A1 offenbarten Ausführung ausgestaltet sein, die insbesondere ein Einebenenregalbediengerät, ein stationäres Lagerregal und einen Vertikalförderer zum Transport von Ware(n) offenbart.

Eine stationäre Fördertechnik der Warentransportanlage kann nach einer in der WO 2020/160585 A2 offenbarten Ausführung ausgestaltet sein, die insbesondere eine Hängefördervorrichtung und eine Hängetasche offenbart.

Eine mobile Fördertechnik der Warentransportanlage kann nach einer in der WO 2016/141395 A1 offenbarten Ausführung ausgestaltet sein, die insbesondere ein Mehrebenenregalbediengerät und ein stationäres Lagerregal offenbart.

Eine Sortiervorrichtung der Warentransportanlage kann nach einer in der WO 2024/000003 A1
offenbarten Ausführung ausgestaltet sein, die insbesondere eine Sortiervorrichtung zum Sortieren der Waren in einem Kommissioniersystem offenbart.

Eine Handhabungsvorrichtung der Warentransportanlage kann nach einer in der WO 2018/132855 A1 offenbarten Ausführung ausgestaltet sein, die insbesondere einen Kommissionierroboter und eine Kommissionierstation zum automatischen Bearbeiten von Aufträgen offenbart.

Eine Arbeitsstation zum Bearbeiten von Aufträgen der Warentransportanlage kann nach einer in der WO 2018/006112 A1 offenbarten Ausführung ausgestaltet sein, die insbesondere eine Kommissionierstation zum manuellen Bearbeiten von Aufträgen offenbart.

Vorteilhaft ist dabei die automatisierte Erkennung der Ursache einer Störung und die geführte und dadurch effizientere Beseitigung der Störung. Da die Maßnahmen zur Beseitigung der Störung angezeigt werden, ist die Beseitigung der Störung auch einer Bedienperson ohne entsprechende Vorkenntnisse und Schulung möglich.

Weiters vorteilhaft ist dabei, dass nach der Durchführung der Maßnahmen zur Beseitigung der Störung, die automatisierte Erkennung des ordnungsgemäßen Funktionierens der Warentransportanlage durch Auswertung von durch Sensoren der Warentransportanlage gelieferten Rückflussinformationen erfolgen kann.

Eine weitere Ausführungsform ist ein Computerprogramm-Produkt mit einem Programm umfassend Softwarecode-Abschnitte, zum Ausführen eines Verfahrens zur Störungsbeseitigung in Warentransportanlagen, wenn das Programm auf einem Computer ausgeführt wird. Das Computerprogramm-Produkt kann ein computerlesbares Medium umfassen, auf dem die Softwarecode-Abschnitte gespeichert sind, wobei das Programm direkt in einen internen Speicher des Computers ladbar ist.

Die Ausführungsformen zeigen mögliche Ausführungsvarianten, wobei die Erfindung nicht auf die speziell dargestellten Ausführungsvarianten derselben eingeschränkt ist, sondern vielmehr auch Kombinationen der einzelnen Ausführungsvarianten untereinander möglich sind. Insbesondere können der Merkmale des Systems auch in einem Verfahren umgesetzt werden und umgekehrt.

Zum besseren Verständnis der Erfindung wird diese anhand der nachfolgenden Figuren näher erläutert. Es zeigen jeweils in stark vereinfachter, schematischer Darstellung:
- Fig. 1: schematisch eine erfindungsgemäße Vorrichtung zur Störungsbeseitigung in Warentransportanlagen; und
- Fig. 2: schematisch ein Flussdiagramm eines Verfahrens zur Störungsbeseitigung in Warentransportanlagen.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

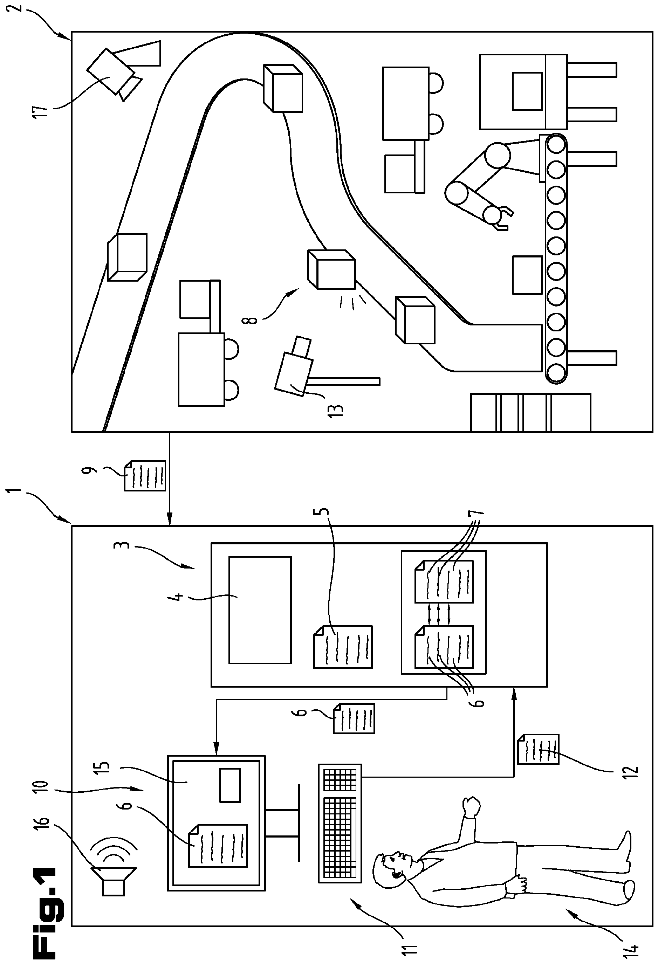

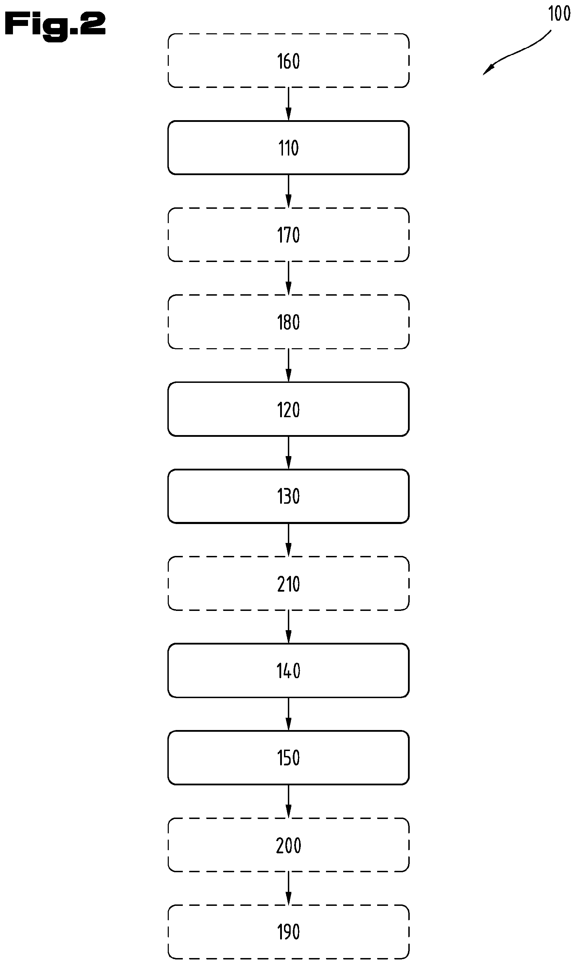

Fig. 1 zeigt schematisch eine Vorrichtung 1 zur Störungsbeseitigung in Warentransportanlagen 2, wobei in Fig. 1 auch eine Warentransportanlage 2 sowie Datenflusselemente und Datenelemente angezeigt sind. Fig. 2 zeigt schematisch ein Flussdiagramm eines Verfahrens 100 zur Störungsbeseitigung in Warentransportanlagen 2. Die folgende Beschreibung erläutert die Erfindung in beiden Figuren. In Fig. 1 ist an einer Stelle der Warentransportanlage 2 eine Störung 8 zu erkennen. Dies kann beispielsweise eine beschädigte Ware sein. Die Ware kann beispielsweise ein Karton oder anderer Gegenstand sein.

Die Vorrichtung 1 kann hierbei in die bereits bestehende Bedieneinrichtung der Warentransportanlage 2 integriert sein, oder auch eine gesonderte Vorrichtung, wie beispielsweise ein Desktop-Computer, ein Laptop-Computer oder auch ein tragbares Rechensystem, wie ein Tablet oder ein Smartphone.

Es sei auch angemerkt, dass eine Vorrichtung 1 dediziert für eine bestimmte Warentransportanlage 2 eingerichtet und verwendet werden kann, jedoch ebenso eine Einrichtung und Verwendung für eine Vielzahl von gleichartigen Warentransportanlagen 2 und auch eine Einrichtung und Verwendung für eine Vielzahl von verschiedenen Warentransportanlagen 2 möglich ist. Wird eine Vorrichtung 1 für mehrere Warentransportanlagen 2 verwendet, so ist in der Ausgabeeinrichtung 10 neben den weiter unten erläuterten Informationen auch noch die konkrete Warentransportanlage 2 zu identifizieren, bei der die Störung 8 auftritt.

Ebenso ist denkbar, dass mehrere Vorrichtungen 1 gleichzeitig verwendet werden. Hier kann beispielsweise eine zweite, oder weitere, Vorrichtung 1 als Ersatz bereitgestellt werden, falls die erste Vorrichtung 1 ausfällt. Ebenso kann, beispielsweise beim Einsatz für mehrere Warentransportanlagen 2 an verschiedenen Orten, an jedem dieser Orte jede Störung 8 jeder Warentransportanlage 2 ausgegeben werden. Und schließlich, beispielsweise im Falle von tragbaren Vorrichtungen 1, die von verschiedenen Personen mitgeführt werden, können auf jeder Vorrichtung 1 und damit an jede dieser Personen, Störungen 8 ausgegeben werden.

Die Vorrichtung 1 umfasst eine Recheneinrichtung 3, die beispielsweise Prozessoren, wie CPUs und/oder GPUs umfasst. Mit der Recheneinrichtung 3 kann das erfindungsgemäße Verfahren 100 ausgeführt werden.

Die Recheneinrichtung 3 umfasst ein Maschinen-Lern-Modell 4 das beispielsweise anhand von Experteninputs trainiert ist. Dies kann über eine Klassifizierung von Fehlern bzw.

Fehlerclustern erfolgen. Zu den jeweiligen Fehlerclustern werden Störungsbehebungsmaßnahmen 6 und mögliche Fehlerursachen 7 verknüpft. Es gibt in diesem Zustand des Datenmodells dann sowohl eine Grundmenge an Fehlern oder Störungen 8 bzw. Fehlerclustern als auch eine Grundmenge an Störungsbehebungsmaßnahmen 6 die zufolge des Expertenfeedbacks miteinander verknüpft werden.

Das Maschinen-Lern-Modell 4 kann auch durch die Verwendung von Daten über Störungen 8, Ursachen 7 für Störungen 8 und Störungsbehebungsmaßnahmen 6 als Trainingsdaten trainiert sein, wobei die Daten über Störungen 8, Ursachen 7 für Störungen 8 und Störungsbehebungsmaßnahmen 6 auf der Grundlage von aufgezeichneten Störungen 8, beispielsweise von gleichen oder ähnlichen Warentransportanlagen 2, und deren Behebung miteinander verknüpft sind.

Die Recheneinrichtung 3 umfasst weiterhin Betriebsdaten 5 der Warentransportanlage 2. Diese Betriebsdaten 5 umfassen beispielsweise strukturelle und logische Anordnungen und Abhängigkeiten der einzelnen Komponenten innerhalb der Warentransportanlage, diverse Zustandsinformationen von Komponenten und Netzwerkadressen der Anlagenkomponenten der Warentransportanlage.

Im Folgenden sollen konkrete Beispiele beschrieben werden, die jedoch nicht die ausschließliche Anwendbarkeit des Gegenstandes bedeuten. Zum Beispiel können die Betriebsdaten 5 den Aufbau der Anlage umfassen, in welcher Abfolge die jeweiligen Komponenten innerhalb der Warentransportanlage 2 angeordnet sind und welche Sensoren zu den jeweiligen Komponenten zuzuordnen sind. Dadurch sind die möglichen Wege von Waren nachvollziehbar und diese Information der möglichen Sequenzen einschließlich Identifikationsnummern oder Modulnummern der einzelnen Komponenten ermöglichen die Zuordnung einer oder mehrerer Fehler- oder Störungsmeldungen 9, welche Informationen über Modulnummern der Komponenten, in denen die Störung 8 auftritt mitführen, zu der einen oder mehreren betroffenen Komponenten an der eine oder mehrere Störungen 8 anliegen.

Als Beispiel einer konkreten Sequenz kann die Abfolge eines Rollenförderers auf eine Hebeeinrichtung, welche mehrere Rollenförderer verbindet, welche wiederum jeweils Waren für ein oder mehrere Einebenenregalbediengerät, auch Shuttle genannt, bereitstellen, genannt werden. Tritt eine oder mehrere Fehlermeldungen 9 bei der Übergabe der Hebeeinrichtung auf, dann ist anhand der Sequenz der Komponenten eindeutig erwartbar, dass diese nicht mit einer anderen Fehlermeldung 9 des ersten Rollenförderer in ursächlichem Zusammenhang steht.

Gleichzeitig ergibt sich aus diesen Betriebsdaten auch, dass eine oder mehrere Fehlermeldungen 9 beim Einebenenregalbediengerät in der niedrigsten Vertikalposition mit geringer Wahrscheinlichkeit in Zusammenhang mit einer oder mehrerer Fehlermeldungen 9 des Einebenenregalbediengerät der höchsten Vertikalposition steht, sofern die Einebenenregalbediengeräte in den Positionen dazwischen nicht betroffen sind bzw. zwischen diesen keine direkte irgendwie geartete Verbindung besteht. Es ist mit einer höheren Wahrscheinlichkeit daher davon auszugehen, dass die eingegangen Fehlermeldungen 9 aufgrund von unterschiedlichen Störungen 8 auftreten.

Anhand dieser strukturellen und logischen Anordnungen lassen sich auch kritische Teile der Warentransportanlage 2 identifizieren, an denen Störungen 8 einen besonders großen Einfluss auf die Verfügbarkeit der Anlage 2 haben. Darüber hinaus ermöglichen im Rahmen der Betriebsdaten 5 die Zustandsinformationen eine weitere Einschränkung bei der Ermittlung der Fehlerursache 7, derart dass anhand der vorhandenen Vertikalposition einer Hebeeinrichtung, ein kausaler Zusammenhang einer Fehlermeldung 9 bei einer Hebeeinrichtung in der niedrigsten Vertikalposition nicht mit einer Fehlermeldung 9 eines Rollenförderers in der höchsten Vertikalposition zusammenhängt.

Gemeinsam mit der zeitlichen Information des Auftretens der Fehlermeldungen 9, können zusammen mit der Struktur der Komponenten sowie deren Betriebszuständen als Teil der Betriebsdaten 5 auch Zeiteinheiten definiert werden. Innerhalb solcher Zeiteinheiten kann dann ein kausaler Zusammenhang zwischen dem Auftreten der Fehlermeldungen 9 an bestimmten Komponenten als möglich erkannt oder auch ausgeschlossen werden. So wird eine Fehlermeldung 9 bei einer Hebeeinrichtung, mit einer weiteren Fehlermeldung 9 bei einer Hebeeinrichtung, welche 24 Stunden später auftritt, sofern die Hebeeinrichtung in der Zwischenzeit still gestanden ist, wahrscheinlich zusammenhängen, wohingegen ein Zusammenhang im Fall eines Dauerbetriebs innerhalb dieser 24 Stunden wahrscheinlich ausgeschlossen werden kann.

Die Betriebsdaten 5, also z.B. Abhängigkeiten von Zuständen von Komponenten der Warentransportanlage 2 oder Abhängigkeiten der strukturellen Anordnung von Komponenten der Warentransportanlage unterstützen damit das Maschinen-Lern-Modell 4 in der Zuordnung der Störungen 8 und speziell darin, dass unterschiedliche Störungen 8 auch als solche identifiziert werden können, damit diesen dann passende Ursachen 7 zugeordnet und in weiterer Folge geeignete Störungsbehebungsmaßnahmen 6 ausgewählt werden können.

Darüber hinaus umfasst die Recheneinrichtung 3 eine Vielzahl von Störungsbehebungsmaßnahmen 6 für die Warentransportanlage 2. Beim Einsatz für mehrere Warentransportanlagen 2 kann die Recheneinrichtung 3 auch Störungsbehebungsmaßnahmen 6 für alle Warentransportanlagen 2 umfassen. In den in der Recheneinrichtung 3 umfassten Störungsbehebungsmaßnahmen 6 ist jede Störungsbehebungsmaßnahme 6 jeweils mindestens einer Ursache 7 einer Störung 8 zugeordnet.

Es sind dabei jedoch auch verschiedene Kombinationen möglich: Eine Störungsbehebungsmaßnahme 6 kann dazu geeignet sein, verschiedene Störungen 8 bzw. deren Ursachen 7 zu beseitigen. Eine Störung 8 bzw. deren Ursache 7 kann auch durch verschiedene Störungsbehebungsmaßnahme 6 beseitigt werden. Eine Störung 8 kann verschiedene Ursachen 7 haben.

Eine Ursache 7 kann verschiedene Störungen 8 hervorrufen. Und schließlich kann auch das Auftreten einer Kombination von mehreren Ursachen 7 eine Störung 8 verursachen, die durch die jeweils einzeln auftretenden Ursachen 7 nicht hervorgerufen wird. Ebenso kann eine Kombination von Störungsbehebungsmaßnahmen 6 dazu geeignet sein, eine bestimmte Störung 8 bzw. deren Ursache zu beseitigen.

Ein Beispiel für eine Störung 8 ist beispielsweise ein falsch bzw. anders ausgelöster Sensor, der beispielsweise Gegenstände auf dem Transportweg erkennt, so dass diese entsprechend ihrer Größe auf verschiedene Wege geleitet werden können.

Eine mögliche Ursache 7, die für diese Störung verantwortlich sein kann, wäre dann beispielsweise ein defekter Gegenstand auf dem Transportweg, der durch eine Formveränderung einen Sensor nicht auslöst oder anders auslöst als ein nicht beschädigter Gegenstand. Weitere mögliche Ursachen 7 wäre ein lediglich falsch positionierter Gegenstand, ein defekter Sensor oder auch eingeschränkte Sicht bei einem optischen Sensor beispielsweise durch Rauch oder Dampf.

Entsprechende geeignete Störungsmaßnahmen 6 wären dann entsprechend Entfernen des defekten Gegenstandes, Repositionieren des Gegenstandes, Austauschen des Sensors und Belüften der Anlage.

Eine Warentransportanlage 2 liefert beim Auftreten einer Störung 8 eine Meldung 9. Im Stand der Technik wird diese beispielweise als Fehlercode an einer Anzeige der Warentransportanlage 2 einfach ausgegeben, und die Warentransportanlage 2 wird angehalten.

Erfindungsgemäß wird diese Meldung 9 nun von der Recheneinrichtung 3 in Schritt 110 des Verfahrens 100 empfangen. Das Maschinen-Lern-Modell 4 ermittelt dann in Schritt 120 die wahrscheinlichste Ursache 7 für die Störung 8 auf Grundlage der in der Meldung 9 enthaltenen Informationen und den dem Modell zur Verfügung stehenden Betriebsdaten 5 der Warentransportanlage 2.

Die wahrscheinlichste Ursache 7 kann durch das Maschinen-Lern-Modell 4 beispielsweise durch Gruppieren 170 und Klassifizieren 180 ermittelt werden. Dabei werden vom

Maschinen-Lern-Modell 4 mehrere Störungen 8 basierend auf empfangenen Meldungen 9 anhand des zeitlichen, räumlichen oder anderweitig als zusammenhängend identifizierten Auftretens der Störungen 8 gruppiert und damit zu Fehlerclustern zusammengefasst, und entsprechend vordefinierten Störungsgruppen klassifiziert. Diese Klassifikation kann dann bei der Ermittlung der wahrscheinlichsten Ursache 7 berücksichtigt werden.

Falls das Maschinen-Lern-Modell 4 noch nicht trainiert ist, kann dies in einem Schritt 160 durchgeführt werden. Dabei werden Fehlermeldungen 9 der Anlage 2 anhand bspw. des zeitlichen Abstands zu Vorfällen bzw. Fehlerfällen gruppiert und bekannte Störungen 8 werden von Experten initial anhand ihrer Expertenerfahrung klassifiziert. Diese Gruppierungen und Klassifizierungen können als Trainingsdaten bzw. als Referenz für das Maschinen-Lern-Modell 4 verwendet werden. In Fig. 2 ist Schritt 160 vor Schritt 110 aufgeführt, er kann jedoch auch zu einem anderen Zeitpunkt ausgeführt werden, der lediglich vor Schritt 120 liegen sollte.

In den Schritten 170 und 180, also der Inferenz, können dann die Vorfälle bzw. Fehlerfälle entsprechend des Maschinen-Lern-Modells 4 in unterschiedliche Fehlergruppen klassifiziert werden, d.h. die Fehlerfälle können anhand des Maschinen-Lern-Modells 4 den dann bekannten Fehlergruppen zugeordnet werden. Aus der Fehlergruppe können dann wahrscheinliche Fehlerursachen 7 identifiziert werden und Störungsbehebungsmaßnahmen 6 dafür vorgeschlagen werden. Durch die Klassifizierung, die durch entsprechendes Training in Schritt 160 ermöglicht wird, steigt die Qualität der Fehlerursachenermittlung in Schritt 120. In Fig. 2 sind die Schritte 170 und 180 direkt vor dem Schritt 120 aufgeführt, er kann jedoch auch zu einem anderen Zeitpunkt ausgeführt werden, der lediglich vor Schritt 120 und nach Schritt 160 liegen sollte. Auch ein Klassifizieren 180 ohne vorheriges Gruppieren ist denkbar, dann werden die Störungen 8 bzw. deren Meldungen 9 in Klassen eingeteilt, ohne vorher in Schritt 170 gruppiert zu werden.

Unabhängig davon, kann in Schritt 160 das Maschinen-Lern-Modell 4 trainiert werden. Bei Bedarf kann der Schritt 160 wiederholt werden, um zu einer Erhöhung der Qualität am Beispiel der Fehlerfälle aus Schritt 170 beizutragen. Ein auf Basis der Betriebsdaten 5 einer Warentransportanlage 2 trainiertes Maschinen-Lern-Modell 4 kann auch bei einer anderen Warentransportanlage 2, wobei die Anlagen ähnlich oder auch verschieden strukturiert sein können, eingesetzt werden bzw. es kann ein Maschinen-Lern-Modell 4 mittels Betriebsdaten 5 von mehreren Warentransportanlagen 2 trainiert werden.

Zeitliche Zusammenhänge können einen kausalen Zusammenhang anzeigen, wenn beispielsweise bei Versagen eines Transportes auf einer Fördertechnik unmittelbar darauf eine erwartete Positionssensorik nicht ausgelöst wird oder wenn aufgrund des Versagens eines Sensors innerhalb eines erwarteten Ablaufs in zeitlicher Nähe weitere Meldungen von den Folgeschritten erfolgen.

Räumliche Zusammenhänge können anzeigen, dass mehrere Störungen 8 in demselben Teil einer Warentransportanlage 2 auftreten und somit ebenfalls einen Zusammenhang der Störungen 8 anzeigen.

Anderweitige Zusammenhänge können darin bestehen, dass idente Typen von Waren, die innerhalb der Warentransporteinheit 2 zu Häufungen von Störungen 8 führen oder Lichteinstrahlung zu bestimmten Tageszeiten, die bei bestimmten Jahreszeiten zu einer Blendung von Sensorik führen.

Auf Grundlage der ermittelten wahrscheinlichsten Ursache 7 der Störung 8 und den Betriebsdaten 5 wird dann durch die bestehenden Zuordnungen der Störungsbehebungsmaßnahme 6, der Ursachen 7 und der Störungen 8, die in der Recheneinrichtung 3 vorliegen, in Schritt 130 eine geeignete Störungsbehebungsmaßnahme 6 zur Beseitigung der Störung 8 ausgewählt.

Vorrichtung 1 umfasst weiterhin eine Ausgabeeinrichtung 10, an der die ausgewählte, geeignete Störungsbehebungsmaßnahme 6 in Schritt 140 ausgegeben werden kann. Die Ausgabeeinrichtung 10 kann hierbei eine Anzeigeeinrichtung 15 umfassen, wie beispielsweise einen Monitor oder eine Anzeige mit verschiedenen Symbolen, an der die ausgewählte Störungsbehebungsmaßnahme 6 angezeigt werden kann. Die Ausgabe der Störungsbehebungsmaßnahme 6 kann in Form einer Anleitung, gegebenenfalls auch mit Bewegtbildern, ausgestaltet sein. In Fig. 1 ist als Beispiel auf Anzeigeeinrichtung 15 der beschädigte Gegenstand der Störung 8 zu sehen.

Die Anzeige 15 kann natürlich weitere Informationen umfassen, wie beispielsweise ein Fehlerprotokoll oder andere weitergehende Informationen zu den aktuellen und/oder früheren Störungen 8. Mit einem Monitor und entsprechenden Eingabegeräten steht einer Bedienperson 14 auch die Möglichkeit zur Verfügung weitergehende Konfigurationen, Bedienungen und/oder Interaktionen mit der Warentransportanlage 2 vorzunehmen.

Die Vorrichtung 1 und/oder die Warentransportanlage 2 kann auch weiterhin eine oder mehrere Aufnahmeeinrichtungen 17 umfassen. In Fig. 1 ist exemplarisch lediglich eine Aufnahmeeinrichtung 17 in der Warentransportanlage 2 angezeigt. Solche Aufnahmeeinrichtungen 17 können die Warentransportanlage 2 oder Abschnitte davon in Schritt 210 aufnehmen, beispielsweise als Video oder als eine Reihe von Bildern. Die Ausgabeeinrichtung 10 kann dann dieses Video oder Bilder als Live-Stream anzeigen, um eine visuelle Beobachtung zu ermöglichen. Dies kann unabhängig von den Störungsmeldungen 9 erfolgen. Die Aufnahmeeinrichtungen 17 können auch dazu verwendet werden, die Störungen 8 zu dokumentieren und die Störungsbeseitigung zu unterstützen. Das Videosignal oder die Bilder können dabei in Kombination mit der ausgewählten Störungsbehebungsmaßnahme 6 auf der Ausgabeeinrichtung 10 bzw. der Anzeigeeinrichtung 15 in Schritt 140 angezeigt werden. In Fig. 1 ist als Beispiel auf Anzeigeeinrichtung 15 rechts neben dem beschädigten Gegenstand ein Symbol für eine Videoeinblendung zu sehen. In Fig. 2 ist Schritt 210 direkt vor Schritt 140 aufgeführt, er kann jedoch auch zu einem anderen Zeitpunkt - auch kontinuierlich - ausgeführt werden, der lediglich vor Schritt 140 liegen sollte.

Die Ausgabeeinrichtung 10 kann alternativ oder zusätzlich zur Anzeigeeinrichtung 15 auch eine Tonausgabeeinrichtung 16 umfassen, an der die ausgewählte Störungsbehebungsmaßnahme 6 akustisch ausgegeben werden kann. Dies kann beispielsweise als akustische Anweisung erfolgen, bevorzugter Weise Schritt für Schritt, falls die Störungsbehebungsmaßnahme 6 komplexer ist.

Die Vorrichtung 1 umfasst weiterhin eine Erfassungseinrichtung 11, in der in Schritt 150 Rückflussinformationen 12 erfasst werden. Die Rückflussinformationen 12 zeigen an, dass die Störung 8 behoben ist.

Dabei können die Rückflussinformationen 12 über Sensoren 13 erfassen sein und/oder von einer Bedienperson 14 eingegeben sein. Ein Beispiel für die Sensorenerfassung wäre hierbei, dass Sensoren 13, die möglicherweise auch die Störung 8 initial erfasst haben, was zur Meldung 9 führte, nun feststellen, dass die Störung nicht mehr vorliegt. Dies ist in Fig. 1 nicht gezeigt.

Sensoren 13, die Rückflussinformationen 12 erfassen können, sind beispielsweise Lichtschranken, Lichtlaufzeitsensoren, Kameras, diverse integrierte Sensorik für Lage, Geschwindigkeit und Beschleunigung z.B. bei Antrieben und allgemeine Lagesensoren.

Ein Beispiel für die Eingabe von Rückflussinformationen 12 durch eine Bedienperson 14 kann dadurch verwirklicht werden, dass die Bedienperson an der Erfassungseinrichtung 11, die beispielsweise eine Tastatur oder ähnliche Eingabegeräte umfassen kann, eingibt, dass die Störung 8 beseitigt ist und/oder dass der aktuell zu bewirkende Schritt der Störungsbehebungsmaßnahme 6 ausgeführt ist. Der Weg der von einer Bedienperson 14 eingegebenen Rückflussinformation 12 zur Recheneinrichtung 3 ist in Fig. 1 schematisch dargestellt.

Die Erfassungseinrichtung 11 kann auch beide Arten von Rückflussinformationen 12 erfassen und diese miteinander in einem Schritt 200 vergleichen, d.h. die erfassten Rückflussinformationen 12 validieren. Eine Bestätigung könnte dann erst dann vorliegen, wenn beide Arten von Rückflussinformationen 12 eine Bestätigung anzeigen. In Fig. 2 ist Schritt 200 nach Schritt 150 aufgeführt, er kann jedoch auch zu einem anderen Zeitpunkt ausgeführt werden, der lediglich nach Schritt 150 liegen sollte.

Die Rückflussinformationen 12 können auch eine negative Bestätigung enthalten, d.h. durch die vorgeschlagene Störungsbehebungsmaßnahme 6 wurde die Störung 8 nicht beseitigt, bzw. dass die vorgeschlagene Störungsbehebungsmaßnahme 6 nicht geeignet ist, die Störung 8 zu beseitigen. In dem Fall kann die Recheneinrichtung 3 eine weitere Störungsbehebungsmaßnahme 6 auswählen und ausgeben.

Eine Weiterbildung sieht vor, dass das Maschinen-Lern-Modell 4 durch die so erfassten Rückflussinformationen 12 in Schritt 190 nachtrainiert wird. In Fig. 2 ist Schritt 190 nach Schritt 200 aufgeführt, er kann jedoch auch zu einem anderen Zeitpunkt ausgeführt werden, der lediglich nach Schritt 150 liegen sollte. Das Nachtrainieren 190 ist nicht mit dem Validieren 200 verknüpft.

Zusammenfassend wird durch die hier vorgeschlagene Lösung ermöglicht, dass laufende Fehlerfälle gemeldet werden, durch ein Maschinen-Lern-Modell 4 die wahrscheinlichste Ursache 7 ermittelt wird, und eine dafür geeignete Störungsbehebungsmaßnahme 6 vorgeschlagen wird. Gemäß den in den Rückflussinformationen 12 enthaltenen Rückmeldungen der Tätigkeiten des Anlagenpersonals oder von Sensoren 13 erfolgt eine Bestätigung oder Widerlegung, ob die Störungsbehebungsmaßnahme 6 erfolgreich war. Ein Erfolg ist dadurch eindeutig identifizierbar, dass nach der Störungsbehebung der entsprechende Fehlerfall nicht mehr aktiv angezeigt wird. Für Fälle, bei denen die Störungsbehebungsmaßnahme 6 die Ursache 7 nicht nachhaltig behoben hat, sind Abhilfemaßnahmen, wie z.B. Schwellwerte eines Auftretens einer bestimmten Störung 8 innerhalb eines definierten Zeitraums integriert, um eine falsche Beeinflussung des Maschinen-Lern-Modell 4 zu erkennen und verhindern zu können. So kann eine bestimmte Störung 8 innerhalb eines Zeitraums von einer Stunde 5-mal realistisch auftreten, ein fünfmaliges Auftreten innerhalb eines Zeitraums von 10 Minuten auf eine nicht erfolgreiche Behebung der Ursache 7 hindeuten.

Das Maschinen-Lern-Modell 4 ermittelt, vor Ort oder zentral, die wahrscheinlichste Ursache 7 einer Störung 8 und wählt eine geeignete Maßnahme 6 zur Beseitigung der Störung 8 aus. Der Bedienperson 14 wird durch die Ausgabeeinrichtung 10 interaktiv die ausgewählte Maßnahme 6 vorgeschlagen. Die Bedienperson 14 kann über die Erfassungseinrichtung 11 die Beseitigung quittieren, oder auch weitere Eingaben vornehmen. Zusätzlich oder alternativ kann über erfasste Sensordaten von Sensoren 13 die Beseitigung erfasst werden. Es ist auch eine Validierung der durch die Bedienperson 14 eingegebenen Quittierung mit den Sensordaten möglich. Die so an der Erfassungseinrichtung 11 erhaltenen Rückflussinformationen 12 können dem Maschinen-Lern-Modell 4 wiederum als weitere Trainingsdaten zur Verfügung gestellt werden, wodurch sich die Qualität des Maschinen-Lern-Modells 4 hinsichtlich der Ermittlung der Ursache 7 und der Auswahl der Maßnahme 6 noch verbessern lässt.

Tritt beispielsweise nach einer Durchführung einer bestimmten Maßnahme 6 eine bestimmte Störung 7 nicht mehr auf, führt dies zu einer besseren Zuordnung von Störung 8, Ursache 7 und Maßnahme 6. Die Qualität der Störungsbehebung in der Warentransportanlage 2 kann damit insgesamt verbessert werden.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Vorrichtung zur Störungsbeseitigung
- 2: Warentransportanlage
- 3: Recheneinrichtung
- 4: Maschinen-Lern-Model
- 5: Betriebsdaten
- 6: Störungsbehebungsmaßnahmen
- 7: Ursachen
- 8: Störungen
- 9: Meldung
- 10: Ausgabeeinrichtung
- 11: Erfassungseinrichtung
- 12: Rückflussinformationen
- 13: Sensoren
- 14: Bedienperson
- 15: Anzeigeeinrichtung
- 16: Tonausgabeeinrichtung
- 17: Aufnahmeeinrichtung
- 100: Verfahren zur Störungsbeseitigung
- 110: Empfangen einer Meldung
- 120: Ermitteln der Ursache
- 130: Auswählen einer Störungsbehebungsmaßnahme
- 140: Ausgeben der Störungsbehebungsmaßnahme
- 150: Erfassen von Rückflussinformationen
- 160: Trainieren
- 170: Gruppieren
- 180: Klassifizieren
- 190: Nachtrainieren
- 200: Validieren
- 210: Aufnehmen

## Patentansprüche

1. Vorrichtung (1) zur Störungsbeseitigung in Warentransportanlagen (2), umfassend eine Recheneinrichtung (3) mit
einem Maschinen-Lern-Model (4);
Betriebsdaten (5) über mindestens eine Warentransportanlage (2); und
eine Vielzahl von Störungsbehebungsmaßnahmen (6) für die mindestens eine Warentransportanlage (2), wobei jede der Störungsbehebungsmaßnahmen (6) jeweils mindestens einer Ursache (7) einer Störung (8) zuordnet ist;
wobei die Recheneinrichtung (3) dazu eingerichtet ist,
eine Meldung (9) über eine Störung (8) in der mindestens einen Warentransportanlage (2) zu empfangen;
mit dem Maschinen-Lern-Modell (4) aus der Meldung (9) und den Betriebsdaten (5) die wahrscheinlichste Ursache (7) für die Störung (8) zu ermitteln;
auf der Grundlage der Betriebsdaten (5) und der ermittelten Ursache (7) aus den Störungsbehebungsmaßnahmen (6) mindestens eine Störungsbehebungsmaßnahme (6) auszuwählen, die geeignet ist, die Störung (8) zu beheben;
eine Ausgabeeinrichtung (10), die dazu eingerichtet ist, die mindestens eine ausgewählte Störungsbehebungsmaßnahme (6) auszugeben; und
eine Erfassungseinrichtung (11), die dazu eingerichtet ist, Rückflussinformationen (12), die eine Behebung der Störung (8) betreffen, zu erfassen.

2. Vorrichtung (1) gemäß Anspruch 1, wobei das Maschinen-Lern-Modell (4) durch die Verwendung von Daten über Störungen (8), Ursachen (7) für Störungen (8) und Störungsbehebungsmaßnahmen (6) als Trainingsdaten trainiert ist, wobei die Daten über Störungen (8), Ursachen (7) für Störungen (8) und Störungsbehebungsmaßnahmen (6) auf der Grundlage von aufgezeichneten Störungen (8) und deren Behebung miteinander verknüpft sind.

3. Vorrichtung (1) gemäß Anspruch 1 oder 2, wobei das Maschinen-Lern-Modell (4) mehrere Störungen (8) basierend auf von der Recheneinrichtung (3) empfangenen Meldungen (9) anhand des zeitlichen, räumlichen oder anderweitig als zusammenhängend identifizierten Auftretens der Störungen (8) gruppiert, und entsprechend vordefinierten Störungsgruppen klassifiziert, und wobei die Recheneinrichtung (3) bei der Ermittlung der wahrscheinlichsten Ursache (7) die Klassifikation berücksichtigt.

4. Vorrichtung (1) gemäß einem der Ansprüche 1 bis 3, wobei das Maschinen-Lern-Modell (4) durch zuvor erfasste Rückflussinformationen (12) nachtrainiert ist.

5. Vorrichtung (1) gemäß einem der Ansprüche 1 bis 4, wobei die Erfassungseinrichtung (11) dazu eingerichtet ist, die Rückflussinformationen (12)
über Sensoren (13) zu erfassen, und/oder
von einer Bedienperson (14) als Eingabe zu erhalten.

6. Vorrichtung (1) gemäß einem der Ansprüche 1 bis 5, wobei die Recheneinrichtung (3) weiterhin dazu eingerichtet ist, verschiedene Rückflussinformationen (12) miteinander zu validieren.

7. Vorrichtung (1) gemäß einem der Ansprüche 1 bis 6, wobei die Ausgabeeinrichtung (10) umfasst:
eine Anzeigeeinrichtung (15), die dazu eingerichtet ist, die ausgewählte Störungsbehebungsmaßnahme (6) anzuzeigen, und/oder
eine Tonausgabeeinrichtung (16), die dazu eingerichtet ist, die ausgewählte Störungsbehebungsmaßnahme (6) akustisch auszugeben.

8. Vorrichtung (1) gemäß einem der Ansprüche 1 bis 7, wobei die Vorrichtung (1) und/oder die mindestens eine Warentransportanlage (2) weiterhin mindestens eine Aufnahmeeinrichtung (17) umfasst, die mindestens eine Warentransportanlage (2) oder Abschnitte davon aufnimmt, und die Ausgabeeinrichtung (10) dazu eingerichtet ist, die Aufnahme anzuzeigen, bevorzugterweise in Kombination mit der ausgewählten Störungsbehebungsmaßnahme (6).

9. Computerimplementiertes Verfahren (100) zur Störungsbeseitigung in Warentransportanlagen (2), umfassend
Empfangen (110) einer Meldung (9) über eine Störung (8) in mindestens einer Warentransportanlage (2);
Ermitteln (120), mit einem Maschinen-Lern-Modell (4), aus der Meldung (9) und Betriebsdaten (5) der mindestens einen Warentransportanlage (2) der wahrscheinlichsten Ursache (7) für die Störung (8);
Auswählen (130), auf der Grundlage der Betriebsdaten (5) und der ermittelten Ursache (7), mindestens einer Störungsbehebungsmaßnahme (6), die geeignet ist, die Störung (8) zu beheben, aus einer Vielzahl von Störungsbehebungsmaßnahmen (6) für die mindestens eine Warentransportanlage (2), wobei jeder der Störungsbehebungsmaßnahmen (6) jeweils mindestens eine Ursache (7) einer Störung (8) zuordnet ist;
Ausgeben (140), durch eine Ausgabeeinrichtung (10), der ausgewählten Störungsbehebungsmaßnahme (6); und
Erfassen (150), über eine Erfassungseinrichtung (11), von Rückflussinformationen (12), die eine Behebung der Störung (8) betreffen.

10. Verfahren (100) gemäß Anspruch 9, weiterhin umfassend, Trainieren (160) des Maschinen-Lern-Modells (4) durch die Verwendung von Daten über Störungen (8), Ursachen (7) für Störungen (8) und Störungsbehebungsmaßnahmen (6) als Trainingsdaten, wobei die Daten über Störungen (8), Ursachen (7) für Störungen (8) und Störungsbehebungsmaßnahmen (6) auf der Grundlage von aufgezeichneten Störungen (8) und deren Behebung miteinander verknüpft sind.

11. Verfahren (100) gemäß Anspruch 9 oder 10, weiterhin umfassend, Gruppieren (170), durch das Maschinen-Lern-Modell (4), mehrerer Störungen (8) anhand des zeitlichen, räumlichen oder anderweitig als zusammenhängend identifizierten Auftretens der Störungen (8) und basierend den empfangenen Meldungen (9), und Klassifizieren (180) entsprechend vordefinierten Störungsgruppen, und wobei beim Ermitteln (120) der wahrscheinlichsten Ursache (7) die Klassifikation berücksichtigt wird.

12. Verfahren (100) gemäß einem der Ansprüche 9 bis 11, weiterhin umfassend Nachtrainieren (190) des Maschinen-Lern-Modells (4) durch die erfassten Rückflussinformationen (12) in kontinuierlicher Weise, in festgelegten Abständen oder zu festgelegten Zeitpunkten.

13. Verfahren (100) gemäß einem der Ansprüche 9 bis 12, wobei das Erfassen (150) der Rückflussinformationen ein Erfassen über Sensoren und/oder ein Erhalten von einer Bedienperson als Eingabe umfasst.

14. Verfahren (100) gemäß einem der Ansprüche 9 bis 13, weiterhin mit Validieren (200), durch die Recheneinrichtung (3), von verschiedenen Rückflussinformationen (12).

15. Verfahren (100) gemäß einem der Ansprüche 9 bis 14, wobei das Ausgeben (140) der ausgewählten Störungsbehebungsmaßnahme (6) optisch über eine Anzeigeeinrichtung (15) und/oder akustisch über eine Tonausgabeeinrichtung (16) erfolgt.

16. Verfahren (100) gemäß einem der Ansprüche 9 bis 15, weiterhin umfassend Aufnehmen (210), durch mindestens eine Aufnahmeeinrichtung (17), der mindestens einen Warentransportanlage (2) oder Abschnitte davon, wobei das Ausgeben (140) der ausgewählten Störungsbehebungsmaßnahme (6) ein Ausgeben der Aufnahmen umfasst, bevorzugterweise in Kombination mit der ausgewählten Störungsbehebungsmaßnahme (6).

17. Computerprogrammprodukt umfassend Befehle, die bei der Ausführung des Programms durch einen Computer diesen veranlassen, die Schritte des Verfahrens (100) gemäß einem der Ansprüche 9 bis 16 auszuführen.

18. Computerlesbarer Datenträger, auf dem das Computerprogrammprodukt nach Anspruch 17 gespeichert ist.

19. Datenträgersignal, das das Computerprogrammprodukt nach Anspruch 17 überträgt.
